# EUROPÄISCHE PATENTSCHRIFT

(11) **EP 0 703 958 B1**
(45) Veröffentlichungstag und Bekanntmachung des Hinweises auf die Patenterteilung: **05.03.1997**
(21) Anmeldenummer: 94918389.1
(22) Anmeldetag: 06.06.1994
(51) Int. Cl.: C10M 105/40, C08K 5/10

(54) **VERWENDUNG VON TECHNISCHEN OCTADECANSÄUREESTERN ALS VORZUGSWEISE EXTERNES GLEITMITTEL FÜR PVC-FLASCHEN**
USE OF TECHNICAL-GRADE OCTADECANOIC ACID ESTERS AS A PREFERABLY EXTERNAL LUBRICANT IN THE MANUFACTURE OF PVC BOTTLES
UTILISATION D'ESTERS DE L'ACIDE OCTADECANOIQUE, DE PREFERENCE COMME LUBRIFIANT EXTERNE POUR BOUTEILLES EN PVC

(30) Priorität: 14.06.1993 DE 4319647
(43) Veröffentlichungstag der Anmeldung: 03.04.1996
(73) Patentinhaber: Henkel Kommanditgesellschaft auf Aktien, 40191 Düsseldorf (DE)
(72) Erfinder: WEDL, Peter, D-27568 Bremerhaven (DE); BRAND, Ernst-Udo, D-27572 Bremerhaven (DE); KLAMANN, Jörg-Dieter, D-27574 Bremerhaven (DE); FLEISCHER, Erwin, D-27619 Schiffdorf (DE)
(86) Internationale Anmeldenummer: EP9401831
(87) Internationale Veröffentlichungsnummer: WO9429412

(56) Entgegenhaltungen:
- EP-A- 0 003 156
- EP-A- 0 439 395
- FR-A- 2 365 603
- FR-A- 2 371 480
- US-A- 4 332 702

## Beschreibung

Die Erfindung liegt auf dem Gebiet der Gleitmittel für thermoplastische Kunststoffe und betrifft die Verwendung von Pentaerythrit- und/oder Glycerinester der technischen Octadecansäure mit einer hohen Reinheit als vorzugsweise externes Gleitmittel für die Herstellung von PVC - Flaschen. Die Ester weisen einen Veresterungsgrad von 80 bis 95 % auf. Des weiteren betrifft die Erfindung die Herstellung von PVC - Flaschen sowie vorzugsweise externe Gleitmittel für diese.

Bei der Verarbeitung von PVC-Rezepturen werden hohe Anforderungen an das rheologische Verhalten der Formmasse gestellt. Während des Aufschmelzvorgangs im Extruder muß die Formmasse vor Friktion geschützt werden. Auch während der thermischen Homogenisierung im Schneckenzylinder muß ein gleichmäßiger Fluß gewährleistet sein. Im Schneckenzylinder und während des Durchströmens durch das Werkzeug dürfen keine Friktionsspitzen auftreten. Hinzu kommt, daß die für die Formung von Flaschen erforderlichen Blasvorgänge oft mit hohem Materialdurchsatz ablaufen. Stundenleistungen von 400 bis 500 kg sind keine Seltenheit; sie sind dann jedoch mit hohen thermischen und rheologischen Anforderungen an die Rezeptur der Blasmassen verbunden. Um die hohen Anforderungen zu erfüllen, werden interne Gleitmittel zur Verminderung der Friktionsspitzen in der Schmelze (z.B. gehärtetes Ricinusöl) und externe Gleitmittel zur Reduzierung der Wandhaftung der Schmelze an den heißen schmelzeführenden Teilchen des Blasautomaten eingesetzt. Aufgrund der bedingten Unverträglichkeit der externen Gleitmittel kommt es jedoch gerade bei PVC-Flaschen zu störenden Trübungen.

Aus der deutschen Patentschrift DE-C-2619836 ist es bekannt, daß Ester von Polyolen wie Glycerin, Pentaerythrit oder Propandiol mit Behensäure als inneres und äußeres Gleitmittel gleichermaßen für PVC - Massen geeignet sind. Aufgrund der zufriedenstellenden organoleptischen Prüfungen wird vorgeschlagen, derartige Ester zur Herstellung von Behältern für Nahrung und Getränke zu verwenden. Bei den getesteten Estern handelt es sich ausschließlich um Vollester, d.h. die Hydroxylgruppen der Polyole sind vollständig mit Behensäure verestert. Diese Produkte sind aber alle aufgrund der hohen Preise für die Behensäure zu teuer. Aus diesem Grund wird in der europäischen Offenlegungsschrift EP-A-439395 vorgeschlagen, Ester einer Fettsäuremischung zu verwenden, die neben Palmitin-, Stearin- und Arachinsäure nur 30 bis 50 Gew.% Behensäure enthält. Nach der europäischen Offenlegungsschrift sind diese Ester sowohl als internes als auch als externes Gleitmittel für die Herstellung von PVC - Flaschen geeignet, so daß die Einsatzmenge an internen Gleitmitteln wie Glycerinmonoester der Stearinsäure oder gehärtetes Ricinusöl reduziert werden kann. Auf der einen Seite ist dies tatsächlich ein Vorteil, da die Glycerinmonoester der Stearinsäure als internes Gleitmittel bei der Herstellung von PVC - Flaschen Probleme aufgrund ihrer großen Flüchtigkeit bereiten können. Aufgrund der höheren Flüchtigkeit entstehen nämlich häufig Beläge auf den gekühlten formgebenden Werkzeugen und in der Düse des Blaswerkzeuges. Auf der anderen Seite ist die Möglichkeit zur Reduzierung der Einsatzmenge beispielsweise an preisgünstigem Glycerinmonoester durch die Ester gemäß der europäischen Offenlegungsschrift eine verhältnismäßig teure Lösung. Abgesehen davon ist es den Anwendern häufig lieber, selber nach den Gegebenheiten vor Ort ein externes und internes Gleitmittel zusammenzumischen als ein Gleitmittel mit interner und externer Wirkung mit einem weiteren internen Gleitmittel.

Aufgabe der Erfindung war es, ein Gleitmittel zu entwickeln, das bei geringster Flüchtigkeit eine gute, vorzugsweise externe Gleitmittelwirksamkeit aufweist, ohne die Transparenz der hergestellten PVC-Flaschen negativ zu beeinflussen. Gelichzeitig sollte das Produkt im Vergleich zu den zur Zeit verwendeten Standardsystemen wirtschaftliche Vorteile bieten (z.B. Behensäureester).

Überraschenderweise ist es gelungen, diese Vielzahl an (Teil) Aufgaben zu lösen, indem man als externes Gleitmittel Pentaerythrit- und/oder Glycerinester einer technischen Octadecansäure verwendet. Gleichzeitig müssen im Sinne der Erfindung die Glycerinester einen bestimmten, ausgewählten Veresterungsgrad aufweisen, damit die (Teil) Aufgaben erfüllt werden können.

Gegenstand der vorliegenden Erfindung ist die Verwendung von Pentaerythrit- und/oder Glycerinestern der technischen Octadecansäure mit einer Reinheit von mindestens 90 Gew.%, die einen Veresterungsgrad von 80 bis 95 % aufweisen, als vorzugsweise externes Gleitmittel für die Herstellung von PVC - Flaschen.

Die im Sinne der Erfindung verwendeten Pentaerythrit- und/oder Glycerinester können nach an und für sich bekannten Methoden der organischen Chemie durch Veresterung von Pentaerythrit und/oder Glycerin technischer Octadecansäure hergestellt werden, vorzugsweise in Gegenwart von Veresterungskatalysatoren und/oder bei erhöhten Temperaturen im Bereich von 50 bis 250 °C. Selbstverständlich kann man die Ester auch durch die bekannte Umesterung herstellen. Wichtig und entscheidend im Sinne der Erfindung ist es dabei zum einen, daß die Um- beziehungsweise Veresterung so durchgeführt wird, daß die Ester einen Veresterungsgrad zwischen 80 bis 95 %, vorzugsweise zwischen 80 bis 90 %, aufweisen. Der Veresterungsgrad ist dabei der in % ausgedrückte Quotient aus veresterten Hydroxylgruppen des Pentaerythrits und/oder Glycerins zu theoretisch zu veresternden Hydroxylgruppen des Pentaerythrits und/oder Glycerins. Der Veresterungsgrad wird zum einen über die bei der Ver- und/oder Umesterung eingesetzte Menge an Reaktanten gesteuert und kann zusätzlich über die Hydroxylzahl gemäß DIN 53240 geprüft werden.

Besonders bevorzugt im Sinne der Erfindung wird eine möglichst reine technische Octadecansäure mit einem Reinheitsgrad von 90 - 99 %. Der Anteil ausgedrückt in Gew.-% bezieht sich auf die gewichtsmäßige Zusammensetzung der möglichst reinen technischen Octadecansäure. Diese möglichst reine technische Octadecansäure kann, wie in der organsichen Chemie üblich, durch fraktionierte Destillation der technischen Stearinsäure erhalten werden, die wiederum bei der Spaltung und Destillation und/oder Härtung von natürlichen Fetten und Ölen, zum Beispiel aus Rindertalg, anfällt. Die technische Octadecansäure kann auch aus petrochemischen Rohstoffen gewonnen werden.

Besonders bevorzugt im Sinne der Erfindung wird eine möglichst reine technische Octadecansäure der folgenden Zusammensetzung:
0 bis 4 Gew.% Palmitinsäure
0 bis 2 Gew.% Heptadecansäure
90 bis 99 Gew.% Octadecansäure
0 bis 3 Gew.% Ölsäure
0 bis 3 Gew.% Arachinsäure.
Der Anteil ausgedrückt in Gew.% bezieht sich auf die gewichtsmäßige Zusammensetzung der möglichst reinen technischen Octadecansäure. Diese kann gegebenenfalls noch geringe Mengen anderer Fettsäuren enthalten.

Sofern Pentaerythritester der technischen Octadecansäure im Sinne der Erfindung verwendet werden sollen, ist es bevorzugt, Ester des Pentaerythrits der Zusammensetzung
75 bis 99 Gew.% Pentaerythrit und
1 bis 25 Gew.% Dipentaerythrit - bezogen auf technisches Pentaerythrit -
zu verwenden.

Die Pentaerythritester können ebenso wie die Glyerinester der technischen Octadecansäure alleine oder in Mischung miteinander verwendet werden, wobei Mischungen in jedem beliebigen Mischungsverhältnis möglich sind.

Die Pentaerythrit- und/oder Glycerinester der technischen Octadecansäure werden in üblichen Mengen vorzugsweise als externes Gleitmittel verwendet. In der Regel beträgt die Zusatzmenge 0,2 bis 1,5 phr, vorzugsweise 0,2 bis 0,8 phr. Der Ausdruck "phr" bedeutet, daß auf 100 Gewichtsteile PVC 0,2 bis 1,5 Gewichtsteile der beschriebenen Ester zugegeben werden. Die Pentaerythrit- und/oder Glycerinester werden auf übliche Weise dem PVC beigemischt. Im Sinne der Erfindung wird zur Herstellung der PVC-Flaschen vorzugsweise Polyvinylchlorid (PVC), mit K-Werten im Bereich von 50 - 65, eingesetzt. Das zu verarbeitende Material kann in Form von dry blend oder Granulat vorliegen. Das PVC kann übliche weitere Additive enthalten. so werden besonders gute Effekte im Sinne der Erfindung erzielt, wenn das PVC für die Flaschenherstellung mit an und für sich bekannten Calcium- und/oder Zinkseifen, vorzugsweise von Monocarbonsäuren mit 8 bis 34 C-Atomen stabilisiert ist. Die Calcium- und/oder Zinkseifen wirken dabei neben weiteren Co-Stabilisatoren als Stabilisator gegen thermische Zersetzung des PVC's. Für die PVC-Formmassen geeignete Co-Stabilisatoren sind insbesondere 1,3-Diketone beispielsweise gemäß DE-AS 26 00 516, DE-AS 27 28 862 oder DE-AS 27 28 865, alpha-Ketoenolester beispielsweise gemäß FR-PS 2 383 987, alpha-Acyllactone beispielsweise gemäß DE-AS 26 45 870, substituierte 1,4 Dihydropyridindicarbonsäuren-(3,5) beispielsweise gemäß DE-AS 24 36 007 sowie gegebenenfalls in 1-, 2- und/oder 3-Stellung substituierte Pyrrolverbindungen beispielsweise gemäß EP-A 0 022 087 und/oder Hydrotalcite beispielsweise gemäß DE 3 019 632. Der Einsatz von epoxidiertem Sojaöl neben den Stabilisatoren und Co-Stabilisatoren ist üblich. Selbstverständlich kann das PVC aber auch mit Organozinnverbindungen stabilisiert sein. Weitere typische Additive, die in PVC enthalten sein können, sind interne Gelichmittel (z.B. gehärtetes Ricinusöl), Schlagzähigkeitsverbesserer (z.B. Methacrylat/Butadien/Styrol-Mischpolymerisate), Fließfähigkeitsverbesserer (z.B. Methacrylsäureester) und so weiter, die in üblichen Mengen vorliegen.

Durch die Verwendung der Pentaerythrit- und/oder Glyerinester der technischen Octadecansäure können PVC-Flaschen mit guter Transparenz hergestellt werden. Bei der Verwendung treten aufgrund der geringen Flüchtigkeit der genannten Ester keine Beläge in den gekühlten formgebenden Werkzeugen und der Düse des Blaswerkzeuges auf. Außerdem zeigen die genannten Ester vorzugsweise eine gute externe Gleitwirkung, so daß die Friktion in der PVC-Schmelze reduziert wird und eine Grenzphasenschmierung vorhanden ist. Die geringe Flüchtigkeit der genannten Ester ist mit denen der Behensäurevollester vergleichbar, liegt aber im Vergleich zu technischen Stearinsäurepartial- und Vollester mit einem Palmitinsäureanteil von 20 bis 40 Gew.% sehr viel besser. Schließlich sind die Ester auch noch in ihrer organoleptischen Beschaffenheit sehr gut, so daß sie für PVC-Flaschen, die in der Nahrungsmittelindustrie gebraucht werden, verwendet werden können.

Ein weiterer Gegenstand der vorliegenden Erfindung ist ein Verfahren zur Herstellung von PVC - Flaschen, dadurch gekennzeichnet, daß man vor der Plastifizierung des PVC's die beschriebenen Ester als vorzugsweise externe Gleitmittel zu der zu plastifizierenden PVC - Masse in üblicher Weise einmischt. Wie bereits beschrieben, kann das PVC weitere Additive enthalten. AnschlieBend erfolgt die Verarbeitung der PVC-Masse auf an und für sich bekannte Art und Weise durch Hohlkörperblasen.

Ein weiterer Gegenstand der vorliegenden Erfindung sind vorzugsweise externe Gleitmittel für die Herstellung von PVC - Flaschen, dadurch gekennzeichnet, daß Pentaerythrit- und/oder Glycerinester der technischen Octadecansäure mit Reinheiten von mindestens 90 Gew.% eingesetzt werden, die einen Veresterungsgrad von 80 bis 95 % aufweisen.

### Beispiele

### A) Herstellung der Ester

Als technische Octadecansäure wurde eine Qualität folgender Zusammensetzung gewählt:
- C-Kettenverteilung:: C16 < 4 %
C18 92 - 97 %
C20 < 3 %
C22 < 2,5 %

### A.1) Glycerin-2,5 octadecanat (Veresterungsgrad: 83,3)

Ein Dreihalsrundkolben mit Rührer, Thermometer und absteigendem Liebigkühler wurde mit 60,2 g (0,654 Mol) Glycerin, 469,2 g (1,635 Mol) Octadecansäure der obigen Zusammensetzung und 0,1 g Sn-oxalat als Katalysator beschickt. Das Gemisch wurde unter Rühren auf 210 °C erhitzt und leichtes Vakuum angelegt, das innerhalb von 4 h auf 20 mbar verstärkt wurde. Das Reaktionsprodukt hatte jetzt eine SZ von 0,4. Die Schmelze wurde auf 90 °C abgekühlt, mit Filterhilfsmittel versetzt und filtriert.

Man erhielt ein gelblich wachsiges Produkt mit folgenden Kennzahlen:
Tropfpunkt: 58,2 °C; Säurezahl SZ nach DIN 53402 = 0,26; Verseifungszahl VZ nach DIN 53401 = 189,1 (berechnet 183); Hydoxylzahl OHZ nach DIN 53240 = 34,1 (berechnet 37).

### A.2) Pentaerythrit-3,5 octadecanat (Veresterungsgrad : 87,5)

Analog Beispiel A.1) wurden 63,1 g (0,464 Mol) Pentaerythrit und 466,1 g (1,624 Mol) Octadecansäure der obigen Zusammensetzung umgesetzt. Man erhielt ein gelbliches, wachsiges Produkt mit einem Tropfpunkt von 71,4 °C, SZ = 1,02, VZ = 177,3 (berechnet 173), OEZ = 93,8 (berechnet 104).

(Das eingesetzte Pentaerythrit hat einen Gehalt von mindestens 98 % an Monopentaerythrit).

### A.3) Glycerin-2,5 octadecanat/Pentaerythrit-3,5-octadecanat

Man stellte eine Mischung aus 80 Teilen A.1) und 20 Teilen A.2) her. Man erhielt eine gelblich wachsige Masse mit folgenden Kenndaten: Tropfpunkt 56,1 °C, SZ = 1,3; VZ = 187,8 (berechnet 183); OHZ 31,3 (berechnet 35).

### Vergleichsprodukte

### V.1) Glycerin-2,5 behenat

Analog Beispiel A.1 wurden 41,0 g (0,446 Mol) Glycerin und 379,0 g (1,115 Mol) Behensäure mit einer Reinheit von etwa 90 Gew.% miteinander umgesetzt. Man erhielt eine gelbliche, wachsige Masse mit einem Tropfpunkt von 71,2 °C; SZ = 1,35; VZ = 154,5 (berechnet 156); OHZ = 27,8 (berechnet 31).

### V.2) Glycerin-2,3 stearatbehenat (Veresterungsgrad : 76,6%)

Analog Beispiel A.1) wurden 68,9 g (0,749 Mol) Glycerin und 512,1 g (1,72 Mol) einer Fettsäuremischung aus 80 Gew.% Stearinsäure und 20 Gew.% Behensäure aus V.1) miteinander umgesetzt. Man erhielt ein gelbliches, wachsiges Produkt mit einem Tropfpunkt von 60,5 °C, SZ = 1,2; VZ = 176,7 (berechnet 176); OHZ = 58,2 (berechnet 53).

### V.3) Technisches Glycerin-tristearat

Als Vergleichsprodukt V.3 wurde handelsübliches Glycerin-tri-stearat verwendet, wobei die Fettsäuremischung zwischen 60 bis 80 Gew.% reine Stearinsäure und zwischen 20 bis 40 Gew.% Palmitinsäure ggf. neben untergeordneten Mengen anderer Fettsäuren enthält.

### B) Flüchtigkeit

Es wurde die Flüchtigkeit der erfindungsgemäß verwendeten Ester im Vergleich zu anderen Estern im Brabender Feuchtigkeitsbestimmer Type 890500 getestet. Dazu wurden 10 g der Prüfsubstanz 2 und 4 Stunden im Ofen bei 160°C (einer Temperatur, die auch bei der Plastifizierung von PVC auftritt) aufbewahrt und nach 2 bzw. 4 Stunden zur Bestimmung des Masseverlustes direkt verwogen. Der Quotient aus Masseverlust und eingesetzten 10 g ergibt die Flüchtigkeit. Je höher der prozentuale Wert, desto schlechter ist die Flüchtigkeit und desto größer ist die Gefahr, daß sich Beläge auf den formgebenden Werkzeugen bilden.

Es wurden folgende Werte gefunden:

| Beispiel | A1 | A2 | A3 | V1 | V2 | V3 |
|---|---|---|---|---|---|---|
| 2 Std | 0,2 % | 0,2 % | 0,4 % | 0,2 % | 0,7 % | 0,9 % |
| 4 Std | 0,5 % | 0,4 % | 0,8 % | 0,4 % | 1,3 % | 1,7 % |

Man kann aus der Aufstellung entnehmen, daß die erfindungsgemäß verwendeten technischen Octadecansäureester vergleichbare Flüchtigkeiten wie die wesentlich teureren Behensäurevollester haben, aber eine sehr viel geringere Flüchtigkeit als Glycerinester auf Basis technischen Stearinsäure/Behensäure (Beispiel V2) bzw. auf Basis von technischer Stearinsäure (Beispiel V3).

### C) Externe Gleitmittelwirkung/Transparenz

Es wurden PVC - Massen der in Tabelle 1 wiedergegebenen Zusammensetzung getestet.

**Tabelle 1**

| PVC - Massen | | | | |
|---|---|---|---|---|
| | B.1) | B.3) | V.B.1) | V.B.2) |
| Suspensions-PVC; K-Wert 58 | 100 | 100 | 100 | 100 |
| Polymethylmethacrylat als Fließmittel (Kane-ACE B 28A^{R}) | 8 | 8 | 8 | 8 |
| Methylmethacrylat-Ethylacrylat-Copolymer (Paraloid^{R} K 120 N) | 1 | 1 | 1 | 1 |
| Sojaölepoxid | 5 | 5 | 5 | 5 |
| Zink-ethylhexanoat | 0,1 | 0,1 | 0,1 | 0,1 |
| technisches Calciumstearat | 0,5 | 0,5 | 0,5 | 0,5 |
| Rizinusöl, gehärtet | 2,5 | 2,5 | 2,5 | 2,5 |
| oxidiertes Polyethylenwachs | 0,2 | 0,2 | 0,2 | 0,2 |
| A.1) | 0,6 | - | - | - |
| A.3) | - | 0,6 | - | - |
| V.1) | - | - | 0,6 | |
| V.2) | - | - | - | 0,6 |
| Stearoylbenzoylmethan | 0,2 | 0,2 | 0,2 | 0,2 |

Die Transparenz wurde an 4 mm dicken Preßplatten mittels Transparenzmeßgerät der Firma Dr. Bruno Lange GmbH, Neuss, gegenüber Luft ermittelt, wobei nach dem Absorptionsverfahren gearbeitet wurde, sowie auch visuell beurteilt.

Die Gleitmittelwirkung wurde als Plastifizierzeit in einem Meßkneterversuch mit Hilfe eines Plastographen der Firma Haake, Haake-Rheometer System 90, bei einer Kammertemperatur von 140°C und einer Kneterdrehzahl von 20 min-1 bestimmt. Die Untersuchungen erfolgten jeweils an 48 g der PVC Masse nach Tabelle 1. Die Ergebnisse sind zusammen mit der Transparenz in Tabelle 2 zusammengefaßt. Dabei ist die externe Gleitmittelwirkung um so besser, je größer die Plastifizierzeit (in Minuten) ist.

**Tabelle 2**

| Transparenz / Plastifizierzeit | | | |
|---|---|---|---|
| | Transparenz | | |
| Beispiel | Lichtdurchlässigkeit (%) | visuell | Platifizierzeit in Minuten |
| B.1) | 43 | transparent | 3:06 |
| B.3) | 42 | transparent | 2:58 |
| B.V.1) | 41 | transparent | 3:01 |
| B.V.2) | 42 | transparent | 2:58 |

Aus Tabelle 2 ist ersichtlich, daß die mit den erfindungsgemäßen externen Gleitmitteln versehenen PVC-Massen eine vergleichbare Transparenz mit den Behensäurevollester (V.B.1) haben. Die gemessene Gleitmittelwirksamkeit in Form der Plastifizierzeit liegt im Vergleich zu den Behensäureestern für die erfindungsgemäßen Glycerinester auf Basis der technischen Octadecansäure in einem vergleichbaren Rahmen, obgleich man man eigentlich annehmen sollte, daß die Ester mit längerer Fettsäure (Behensäure) zu merkbar längeren Plastifizierzeiten führen sollten.

## Patentansprüche

1. Verwendung von Pentaerythrit- und/oder Glycerinestern der technischen Octadecansäure mit einer Reinheit von mindestens 90 Gew.%, die einen Verseterungsgrad von 80 bis 95 % aufweisen, als vorzugsweise externes Gleitmittel für die Herstellung von PVC - Flaschen.

2. Verwendung nach Anspruch 1, dadurch gekennzeichnet, daß Pentaerythrit-und/oder Glycerinester mit einem Veresterungsgrad von 80 bis 90 % verwendet werden.

3. Verwendung nach Anspruch 1 oder 2, dadurch gekennzeichnet, daß Ester der technischen Octadecansäure mit der Zusammensetzung
0 bis 4 Gew.% Palmitinsäure
0 bis 2 Gew.% Heptadecansäure
90 bis 99 Gew.% Octadecansäure
0 bis 3 Gew.% Ölsäure
0 bis 3 Gew.% Arachinsäure und ggf. untergeordneten Mengen anderer Fettsäuren verwendet werden.

4. Verwendung nach Anspruch 1, dadurch gekennzeichnet, daß Ester des Pentaerythrits der Zusammensetzung
75 bis 95 Gew.% Pentaerythrit
1 bis 25 Gew.% Dipentaerythrit
verwendet werden.

5. Verwendung nach Anspruch 1, dadurch gekennzeichnet, daß Pentaerythrit-und/oder Glycerinester in Mengen von 0,2 bis 1,5 phr verwendet werden, vorzugsweise 0,2 bis 0,8 phr (parts per hundred resin).

6. Verwendung nach Anspruch 1, dadurch gekennzeichnet, daß die Pentaerythrit- und/oder Glycerinester als vorzugsweise externes Gleitmittel für die Herstellung von mit Calcium- und/oder Zinkseifen stabilisierten PVC - Flaschen verwendet werden.

7. Verfahren zur Herstellung von PVC- Flaschen, dadurch gekennzeichnet, daß man vor der Plastifzierung der PVC - Masse dieser als vorzugsweise externes Gleitmittel Pentaerythrit- und/oder Glycerinester der technischen Octadecansäure mit einer Reinheit von mindestens 90 Gew.%, die einen Veresterungsgrad von 80 bis 95 % aufweisen, einträgt.

8. Gleitmittel mit vorzugsweise externer Gleitwirkung für die Herstellung von PVC-Flaschen, dadurch gekennzeichnet, daß es Pentaerythrit- und/oder Glycerinester einer technischen Octadecansäure mit einer Reinheit von mindestens 90 Gew.% sind, die einen Veresterungsgrad von 80 bis 95 aufweisen.

## Claims

1. The use of pentaerythritol and/or glycerol esters of technical octadecanoic acid with a purity of at least 90% by weight, which have a degree of esterification of 80 to 95%, as a preferably external lubricant for the production of PVC bottles.

2. The use claimed in claim 1, characterized in that pentaerythritol and/or glycerol esters with a degree of esterification of 80 to 90% are used.

3. The use claimed in claim 1 or 2, characterized in that esters of technical octadecanoic acid with the following composition:
0 to 4% by weight of palmitic acid
0 to 2% by weight of heptadecanoic acid
90 to 99% by weight of octadecanoic acid
0 to 3% by weight of oleic acid
0 to 3% by weight of arachic acid
and optionally small quantities of other fatty acids, are used.

4. The use claimed in claim 1, characterized in that esters of pentaerythritol with the following composition:
75 to 95% by weight of pentaerythritol
1 to 25% by weight of dipentaerythritol
are used.

5. The use claimed in claim 1, characterized in that pentaerythritol and/or glycerol esters are used in quantities of 0.2 to 1.5 phr and preferably in quantities of 0.2 to 0.8 phr (parts per hundred resin).

6. The use claimed in claim 1, characterized in that the pentaerythritol and/or glycerol esters are used as a preferably external lubricant for the production of PVC bottles stabilized with calcium and/or zinc soaps.

7. A process for the production of PVC bottles, characterized in that, before plasticization of the PVC compound, pentaerythritol and/or glycerol esters of technical octadecanoic acid with a purity of at least 90% by weight, which have a degree of esterification of 80 to 95%, are introduced as a preferably external lubricant.

8. Lubricants with a preferably external lubricating effect for the production of PVC bottles, characterized in that they are pentaerythritol and/or glycerol esters of a technical octadecanoic acid with a purity of at least 90% by weight which have a degree of esterification of 80 to 95.

## Revendications

1. Utilisation d'esters de pentaérythrite et/ou de glycérine d'acide octadécanoïque technique avec une pureté d'au moins 90 % en poids, qui présentent un degré d'estérification de 80 à 95 %, comme lubrifiant de préférence externe pour la fabrication de bouteilles en PVC.

2. Utilisation selon la revendication 1, caractérisée en ce que l'on met en oeuvre des esters octadénoates de pentaérythrite et/ou de glycérine, qui présentent un degré d'estérification de 80 à 90 %.

3. Utilisation selon la revendication 1 ou 2, caractérisée en ce que l'on met en oeuvre des esters d'acide octadécanoïque technique présentant la composition suivante:
0 à 4 % en poids d'acide palmitique
0 à 2 % en poids d'acide heptadécanoïque
90 à 99 % en poids d'acide octadécanoïque
0 à 3 % en poids d'acide oléique
0 à 3 % en poids d'acide arachique et, le cas échéant, des quantités secondaires d'autres acides gras.

4. Utilisation selon la revendication 1, caractérisée en ce que l'on met en oeuvre des esters de pentaérythrite présentant la composition suivante:
75 à 95 % en poids de pentaérythrite
1 à 25 % en poids de dipentaérythrite.

5. Utilisation selon la revendication 1, caractérisée en ce que l'on met en oeuvre les esters de pentaérythrite et/ou de glycérine en quantités de 0,2 à 1,5 phr, de préférence de 0,2 à 0,8 phr (parts per hundred resin = parties pour cent parties de résine).

6. Utilisation selon la revendication 1, caractérisée en ce que les esters de pentaérythrite et/ou de glycérine sont mis en oeuvre, comme lubrifiant de préférence externe, pour la fabrication de bouteilles en PVC stabilisées avec des savons de calcium et/ou de zinc.

7. Procédé de fabrication de bouteilles en PVC, caractérisé en ce que l'on introduit, avant la plastification de leur masse de PVC, comme lubrifiant de préférence externe, un ester de pentaérythrite et/ou de glycérine d'acide octadécanoïque technique avec une pureté d'au moins 90 % en poids, qui présente un degré d'estérification de 80 à 95 %.

8. Lubrifiants à action de préférence externe pour la fabrication de bouteilles en PVC, caractérisés en ce qu'ils sont constitués d'esters de pentaérythrite et/ou de glycérine d'acide octadécanoïque technique avec une pureté d'au moins 90 % en poids, qui présentent un degré d'estérification de 80 à 95 % en poids.
